# EUROPEAN PATENT APPLICATION

(11) **EP 4 759 835 A1**
(43) Date of publication of application: **17.06.2026**
(21) Application number: 24854268.0
(22) Date of filing: 29.05.2024
(51) Int. Cl.: C08F 4/649, C08F 4/646, C08F 4/654, C08F 10/02

(54) **ZIEGLER-NATTA CATALYST FOR OLEFIN POLYMERIZATION, METHOD FOR PREPARING POLYOLEFIN, AND POLYOLEFIN RESIN**

(30) Priority: 14.08.2023 KR 20230106302
(71) Applicant: Hanwha Solutions Corporation, Seoul 04541 (KR)
(72) Inventor: KWON, Yea Rang, Seoul 04541 (KR); JOUNG, Ui Gab, Seoul 04541 (KR); WOO, Hyun Je, Seoul 04541 (KR)
(74) Representative: Berggren Oy
(86) International application number: PCT/KR2024/007317
(87) International publication number: WO 2025/037715

(57) **Abstract**

Provided are a Ziegler-Natta catalyst for olefin polymerization, a method for preparing polyolefin, and a polyolefin resin. Specifically, provided are a Ziegler-Natta catalyst for olefin polymerization, a method for preparing polyolefin using the catalyst, and a polyolefin resin prepared using the same. The Ziegler-Natta catalyst for olefin polymerization comprises: a Ziegler-Natta pro-catalyst for olefin polymerization comprising a titanium compound represented by Formula 1, a magnesium compound represented by Formula 2, and an internal electron donor; an organoaluminum compound represented by Formula 7; and an external electron donor represented by Formula 3, wherein the internal electron donor is a mixture of a first internal electron donor selected from Formulas 4 to 6, and a second internal electron donor which is selected from the Formulas 4 to 6 and is different from the first internal electron donor, and 10 moles of the mixture contains the first internal electron donor and the second internal electron donor in a mole ratio of 3:7 to 7:3.

## Description

### [Technical Field]

The present invention relates to a Ziegler-Natta catalyst for olefin polymerization, a method for preparing a polyolefin with good processability using the same, and a polyolefin resin.

### [Background Art]

Polyolefins are a class of polymer derived from simple olefins. A polyolefin preparation method known in the art is carried out using a Ziegler-Natta catalyst for polymerization. The Ziegler-Natta catalyst provides a polymer with a highly isotactic stereo-chemical arrangement through polymerization of a vinyl monomer using a transition metal halide.

In particular, as polyethylene, a kind of polyolefin, has been used for various applications in recent years, there is a need for preparation of a polyethylene resin with good processability in order to improve resin productivity.

### [Prior Literature]

### [Patent Document]

Korean Patent Registration Publication No. 10-2423660

### [Disclosure]

### [Technical Problem]

It is an aspect of the present invention to provide a catalyst for preparing a polyolefin with good processability and a method for preparing a polyolefin with good processability by satisfying the density, melt index, and melt index ratio described herein.

### [Technical Solution]

In accordance with one aspect of the present invention, there is provided a Ziegler-Natta catalyst for olefin polymerization.

According to one embodiment of the invention, the Ziegler-Natta catalyst for olefin polymerization includes: a Ziegler-Natta pro-catalyst for olefin polymerization including a titanium compound represented by Formula 1, a magnesium compound represented by Formula 2, and an internal electron donor; an organoaluminum compound represented by Formula 7; and an external electron donor represented by Formula 3, wherein the internal electron donor is a mixture of a first internal electron donor selected from among compounds represented by Formulas 4 to 6 and a second internal electron donor selected from among the compounds represented by Formulas 4 to 6 and different from the first internal electron donor; and wherein the first internal electron donor and the second internal electron donor are present in a mole ratio of 3:7 to 7:3 in 10 moles of the mixture. In some embodiments, the mole ratio of the first internal electron donor to the second internal electron donor may range from about 3.5:6.5 to about 6.5:3.5, for example, about 4:6 to about 6:4, about 4.5:5.5 to about 5.5:4.5, or about 5:5.

[Formula 1] TiXₙ(OR¹)₄₋ₙ

(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently one selected from the group consisting of a halogen group, a cyano group, a nitro group, and a C₁ to C₈ alkyl group.)

[Formula 2] Mg(OR²)ₖX₂₋ₖ

(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently one selected from the group consisting of a halogen group, a cyano group, a nitro group, and a C₁ to C₈ alkyl group.)

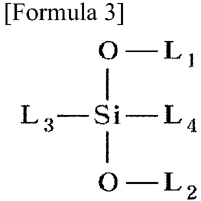

(In Formula 3,
L₁ and L₂ are each independently a substituted or unsubstituted C₁ to C₂₀ alkyl group, where a substituent in "substituted or unsubstituted" is independently one selected from the group consisting of a halogen group, a cyano group, a nitro group, and a C₁ to C₈ alkyl group; and
L₃ and L₄ are each independently one selected from the group consisting of a substituted or unsubstituted C₁ to C₂₀ alkyl group and a substituted or unsubstituted C₃ to C₂₀ cycloalkyl group,
where a substituent in "substituted or unsubstituted" is independently one selected from the group consisting of a halogen group, a cyano group, a nitro group, and a C₁ to C₈ alkyl group.)

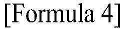

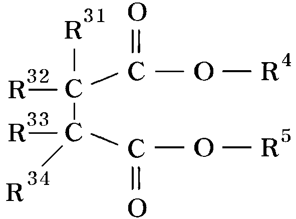

(In Formula 4,
R³¹, R³², R³³ and R³⁴ are each independently one selected from the group consisting of hydrogen, a substituted or unsubstituted C₁ to C₂₀ alkyl group, a substituted or unsubstituted C₃ to C₂₀ cycloalkyl group, and a substituted or unsubstituted C₃ to C₂₀ aryl group, or R³¹ and R³³ are linked to each other to form a substituted or unsubstituted C₃ to C₂₀ cycloalkyl group;
R⁴ and R⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently one selected from the group consisting of a halogen group, a cyano group, a nitro group, and a C₁ to C₈ alkyl group.)

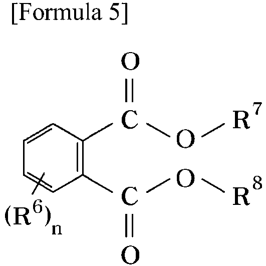

(In Formula 5,
R⁶, R⁷ and R⁸ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
n is an integer of 0 to 4; and
a substituent in "substituted or unsubstituted" is independently one selected from the group consisting of a halogen group, a cyano group, a nitro group, and a C₁ to C₈ alkyl group.)

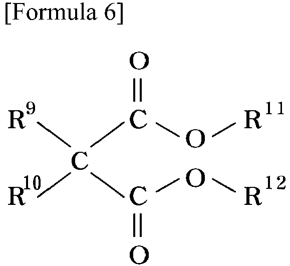

(In Formula 6,
R⁹ and R¹⁰ are each independently one selected from the group consisting of hydrogen, a substituted or unsubstituted C₁ to C₂₀ alkyl group, a substituted or unsubstituted C₃ to C₂₀ cycloalkyl group, and a substituted or unsubstituted C₃ to C₂₀ aryl group, or R⁹ and R¹⁰ are linked to each other to form a substituted or unsubstituted C₃ to C₂₀ cycloalkyl group;
R¹¹ and R¹² are each independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently one selected from the group consisting of a halogen group, a cyano group, a nitro group, and a C₁ to C₈ alkyl group.)

[Formula 7] Al(R¹³)ₚX₃₋ₚ

(In Formula 7,
R¹³ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
p is an integer of 0 to 3; and
a substituent in "substituted or unsubstituted" is independently one selected from the group consisting of a halogen group, a cyano group, a nitro group, and a C₁ to C₈ alkyl group.)
In accordance with another aspect of the present invention, there is provided a polyolefin preparation method.

According to one embodiment, the polyolefin preparation method includes polymerizing an olefin monomer in the presence of the Ziegler-Natta catalyst for olefin polymerization.

In accordance with a further aspect of the present invention, there is provided a polyolefin resin.

According to one embodiment, the polyolefin resin is prepared by the polyolefin preparation method and has an MFR (MI_{21.6}/MI_{2.16}) of about 30.0 to about 50.0. In some embodiments, the polyolefin resin may have an MFR (MI_{21.6}/MI_{2.16}) of about 30.5 to about 49.5, for example, about 30.5 to about 33.5, about 33.5 to about 36.5, about 36.5 to about 39.5, about 39.5 to about 42.5, about 42.5 to about 45.5, or about 45.5 to about 48.5.

### [Advantageous Effects]

By employing two types of specific internal electron donors and a specific external electron donor to achieve the density, melt index, and melt flow ratio specified herein, the Ziegler-Natta catalyst for olefin polymerization enables the production of polyolefins with good processability.

### [Best Mode]

These and other objects, features, and advantages will become apparent from the following embodiments described with reference to the accompanying drawings. However, the present invention is not limited to the embodiments described herein and may be embodied in other forms. Rather, the following embodiments are given by way of illustration to provide a thorough and complete understanding of the present invention such that technical ideas can be fully conveyed to those skilled in the art.

The same reference numerals designate the same elements in description of drawings. In the drawings, dimensions of various elements, layers, and the like may be exaggerated for clarity of illustration. It will be understood that, although the terms first, second, and the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. For example, a first element, component, region, layer, or section discussed below could be termed a second element, component, region, layer, or section without departing from the teachings of example embodiments.

Herein, the singular forms "a", "an" and "the" are intended to include the plural forms as well, unless context clearly indicates otherwise.

Herein, it should be understood that the terms "comprise", "include", "have", and the like are intended to specify the presence of stated features, numbers, steps, operations, components, parts, or combinations thereof, and are not intended to preclude the presence or addition of one or more other features, numbers, steps, operations, components, parts, or combinations thereof.

Herein, unless stated otherwise, all numbers, values and/or expressions used herein to express amounts of components, reaction conditions, polymer compositions and formulations should be understood to be qualified in all cases by the term "about", since such numbers are inherently approximate values reflecting, among other things, various uncertainties in measurement encountered in obtaining such values. Further, when a numerical range is disclosed herein, such a range is continuous and includes all values from the minimum value of the range up to and including the maximum value of the range, unless indicated otherwise. Furthermore, where such a range refers to integers, the range includes all integers from the minimum value of the range up to and including the maximum value of the range, unless indicated otherwise.

Herein, when a specific range is described for a variable, the variable will be understood to include all values within the stated range including the described endpoints of the stated range. For example, the range of "5 to 10" will be understood to include not only values, such as 5, 6, 7, 8, 9, and 10, but also any subrange thereof, such as 6 to 10, 7 to 10, 6 to 9, 7 to 9, and any value between integers that fall within the stated range, such as 5.5, 6.5, 7.5, 5.5 to 8.5, and 6.5 to 9. In addition, for example, the range of "10% to 30%" will be understood to include not only values, such as 10%, 11%, 12%, 13%, and all integers up to and including 30%, but also arbitrary subranges thereof, such as 10% to 15%, 12% to 18%, 20% to 30%, and arbitrary values between any of integers within the stated range, such as 10.5%, 15.5%, 25.5%, and the like.

In recent years, as polyethylene has been used for various applications, there is a need for a catalyst for preparation of a polyethylene resin with good processability and a method for preparing the same in order to improve resin productivity.

In order to solve this problem, the present inventors have developed a Ziegler-Natta catalyst for olefin polymerization and a polyolefin preparation method, which can produce a polyethylene with good processability by mixing at least two types of specific internal electron donors in a pro-catalyst with a specific external electron donor in a specific mole ratio between the internal electron donors Herein, "good processability" may mean that a resin has a high melt flow ratio.

As used herein, "polyethylene with good processability" may be a polyolefin that satisfies the following properties:
(i) Density: 0.950 g/cm³ to 0.965 g/cm³;
(ii) Melt index: 0.1 g/10min to 10.0 g/10min; and
(iii) Melt flow ratio: 30.0 to 50.0.

The density is measured in accordance with ASTM D1505.

The melt index refers to a value under a load of 2.16 kg and is measured at 190°C under a load of 2.16 kg in accordance with ASTM D1238.

The melt flow ratio (MFR) is calculated by measuring a melt index (MI_{2.16}) under a load of 2.16 kg at 190°C in accordance with ASTM D1238 and a melt index (MI_{21.6}) under a load of 21.6 kg at 190°C in accordance with ASTM D1238, followed by calculating a ratio (MI_{21.6}/MI_{2.16}) therebetween.

Herein, unless stated otherwise, "C₁ to Cₙ alkyl group" means a primary alkyl group, a secondary alkyl group (n≥3), and a tertiary alkyl group (n≥4) having 1 to n carbon atoms. For example, the C₁ to Cₙ alkyl group may be a functional group, for example, methyl, ethyl, *n*-propyl, *i*-propyl, *n*-butyl, *i*-butyl, *tert-*butyl*, n*-hexyl, and the like.

Unless stated otherwise, an aryl group refers to a chemical group obtained through removal of one hydrogen atom from a monocyclic or polycyclic C₂ to C₃₀ compound, which contains at least one benzene ring, and derivatives thereof, in which the monocyclic or polycyclic compound containing the benzene ring may include, for example, a benzene ring, toluene, xylene, and the like, where an alkyl side chain is bonded to the benzene ring; biphenyl and the like, where two or more benzene rings are bonded to each other through a single bond; fluorene, xanthene, anthraquinone, and the like, where a benzene ring is condensed with a cycloalkyl group or a heterocycloalkyl group; naphthalene, anthracene, and the like, where two or more benzene rings are condensed, and the like.

Herein, unless stated otherwise, the prefix "hetero" means that a carbon atom is substituted with one to three heteroatoms selected from the group consisting of -N-, -O-, -S-, and -P-. For example, a heteroatom-containing compound may include a pyridine, pyrrole or carbazole containing a nitrogen atom as a heteroatom, a furan or dibenzofuran containing an oxygen atom as a heteroatom, dibenzothiophene, diphenylamine, and the like.

Herein, unless stated otherwise, a halogen group refers to a group XVII element, for example, a fluoro group, a chloro group, a bromo group, an iodo group, and the like.

A Ziegler-Natta catalyst for olefin polymerization according to one embodiment includes: a pro-catalyst including a titanium compound described below, a magnesium compound described below, and an internal electron donor; an organoaluminum described below; and an external electron donor described below, wherein the internal donor is a mixture of two types of internal electron donors described below in a specific mole ratio.

Specifically, the Ziegler-Natta catalyst for olefin polymerization includes an external electron donor represented by Formula 3 and a mixture of first and second internal electron donors selected from among compounds represented by Formulas 4 to 6 and having different chemical structures and mixed in a specific mole ratio.

### [External electron donor]

The external electron donor serves to stabilize catalytic active sites of the titanium compound in the pro-catalyst. A siloxane-based external electron donor represented by Formula 3 can facilitate preparation of a polyolefin with good processability when applied to the first internal electron donor and the second internal electron donor described below.

The external electron donor may be represented by Formula 3.

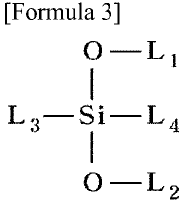

(In Formula 3,
L₁ and L₂ are each independently a substituted or unsubstituted C₁ to C₂₀ alkyl group, where a substituent in "substituted or unsubstituted" is independently one selected from the group consisting of a halogen group, a cyano group, a nitro group, and a C₁ to C₈ alkyl group; and
L₃ and L₄ are each independently one selected from the group consisting of a substituted or unsubstituted C₁ to C₂₀ alkyl group and a substituted or unsubstituted C₃ to C₂₀ cycloalkyl group, where a substituent in "substituted or unsubstituted" is independently one selected from the group consisting of a halogen group, a cyano group, a nitro group, and a C₁ to C₈ alkyl group.)
In one embodiment, at least one of L₃ and L₄ may be a substituted or unsubstituted C₃ to C₂₀ cycloalkyl group. In this case, the Ziegler-Natta catalyst can facilitate preparation of a polyolefin with good processability when applied to the first internal electron donor and the second internal electron donor described below.

For example, any one of L₃ and L₄ may be a substituted or unsubstituted C₃ to C₂₀ cycloalkyl group, for example, a substituted or unsubstituted C₃ to C₁₀ cycloalkyl group or a substituted or unsubstituted C₅ to C₆ cycloalkyl group (first external electron donor).

For example, both L₃ and L₄ may be a substituted or unsubstituted C₃ to C₂₀ cycloalkyl group, for example, a substituted or unsubstituted C₃ to C₁₀ cycloalkyl group or a substituted or unsubstituted C₅ to C₆ cycloalkyl group (second external electron donor).

In one embodiment, the catalyst may include one external electron donor represented by Formula 3, that is, the first external electron donor alone or the second external electron donor alone.

According to one embodiment, the catalyst may include a mixture of two external electron donors represented by Formula 3. In one embodiment, the catalyst may include a mixture of the first external electron donor and the second external electron donor. For example, in 10 moles of the mixture, the first external electron donor and the second external electron donor may be present in a mole ratio of about 3:7 to about 7:3, about 3.5:6.5 to about 6.5:3.5, about 4:6 to about 6:4, about 4.5:5.5 to about 5.5:4.5, or about 5:5.

In one embodiment, L₁ and L₂ may be each independently a substituted or unsubstituted C₁ to C₁₀ alkyl group, for example, a substituted or unsubstituted C₁ to C₅ alkyl group.

In one embodiment, the external electron donor may include at least one of compounds represented by Formulas 3-1 and 3-2.

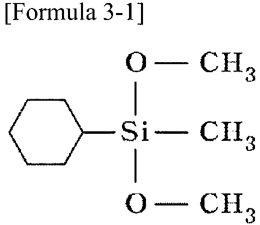

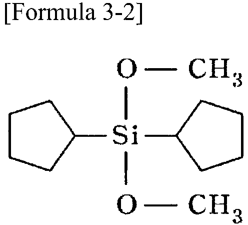

According to one embodiment, the external electron donor may be present in an amount of about 40 wt% to about 60 wt%, based on 100 wt% of the total Ziegler-Natta catalyst for olefin polymerization. Specifically, the external electron donor may be present in an amount of about 42 wt% to about 58 wt%, for example, about 44 wt% to about 56 wt%, about 46 wt% to about 54 wt%, or about 48 wt% to about 52 wt%. Within this range, the catalytic active site can have high stability and there is no problem of deterioration in activity due to poisoning of the catalytic active site.

According to one embodiment, the external electron donor represented by Formula 3 may be present in an amount of about 95 wt% or more, preferably about 99 wt% to about 100 wt%, more preferably about 100 wt%, based on 100 wt% of the total external electron donors in the Ziegler-Natta catalyst for olefin polymerization. Within this range, the effects of the present invention can be easily realized. As used herein, "total external electron donor" may refer to a compound which is included independently of the pro-catalyst in the Ziegler-Natta catalyst for olefin polymerization and is known to those skilled in the art to play a role in stabilizing the catalytic active sites of the titanium compound.

### [Internal electron donor]

When the external electron donor is included in the Ziegler-Natta catalyst for olefin polymerization, the internal electron donor is selected to produce a polyolefin with good processability, that is, a polyolefin satisfying a specific range of density, melt index, and melt index ratio. The internal electron donor provides various active sites when applied to the external electron donor, thereby enabling the preparation of a polyolefin resin with good processability.

The internal electron donor is a mixture of a first internal electron donor selected from among compounds represented by Formulas 4 to 6 and a second internal electron donor selected from among the compounds represented by Formulas 4 to 6 and different from the first internal electron donor, in which the first internal electron donor and the second internal electron donor are present in a mole ratio of about 3:7 to about 7:3 in 10 moles of the mixture. In some embodiments, the mole ratio of the first internal electron donor to the second internal electron donor may range from about 3.5:6.5 to about 6.5:3.5, for example, about 4:6 to about 6:4, about 4.5:5.5 to about 5.5:4.5, or about 5:5.

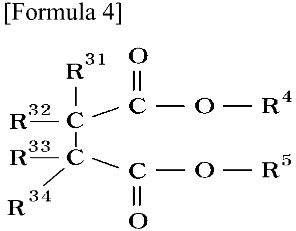

(In Formula 4,
R³¹, R³², R³³ and R³⁴ are each independently one selected from the group consisting of hydrogen, a substituted or unsubstituted C₁ to C₂₀ alkyl group, a substituted or unsubstituted C₃ to C₂₀ cycloalkyl group, and a substituted or unsubstituted C₃ to C₂₀ aryl group, or R³¹ and R³³ are linked to each other to form a substituted or unsubstituted C₃ to C₂₀ cycloalkyl group;
R⁴ and R⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently one selected from the group consisting of a halogen group, a cyano group, a nitro group, and a C1 to C8 alkyl group.)

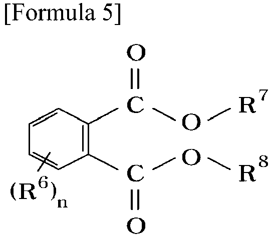

(In Formula 5,
R⁶, R⁷ and R⁸ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
n is an integer of 0 to 4; and
a substituent in "substituted or unsubstituted" is independently one selected from the group consisting of a halogen group, a cyano group, a nitro group, and a C₁ to C₈ alkyl group.)

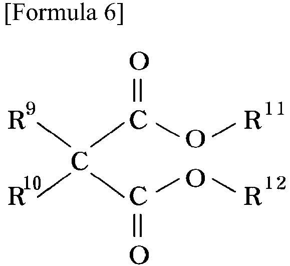

(In Formula 6,
R⁹ and R¹⁰ are each independently one selected from the group consisting of hydrogen, a substituted or unsubstituted C₁ to C₂₀ alkyl group, a substituted or unsubstituted C₃ to C₂₀ cycloalkyl group, and a substituted or unsubstituted C₃ to C₂₀ aryl group, or R⁹ and R¹⁰ are linked to each other to form a substituted or unsubstituted C₃ to C₂₀ cycloalkyl group;
R¹¹ and R¹² are each independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently one selected from the group consisting of a halogen group, a cyano group, a nitro group, and a C₁ to C₈ alkyl group.)

The mixture includes both the first internal electron donor and the second internal electron donor. For a Ziegler-Natta catalyst for olefin polymerization including the first internal electron donor alone or the second internal electron donor alone with respect to the external electron donor, it can be difficult to produce a polyolefin that satisfies all of the density, melt index and melt index ratio specified herein. In particular, such a Ziegler-Natta catalyst can have poor processability due to difficulty in satisfying the melt flow ratio described above.

The mixture may include both the first internal electron donor and the second internal electron donor in a mole ratio of about 3:7 to about 7:3 in 10 moles of the mixture. In some embodiments, the mole ratio may range from about 3.5:6.5 to about 6.5:3.5, for example, about 4:6 to about 6:4, about 4.5:5.5 to about 5.5:4.5, or about 5:5. If the mole ratio is less than about 3:7, for example, about 1:9 or about 2:8, it can be difficult to produce a polyolefin satisfying all of the density, melt index, and melt index ratio specified herein, or to produce a polyolefin with good processability through addition of the internal electron donor. If the mole ratio is greater than about 7:3, for example, about 8:2, or about 9:1, it can be difficult to produce a polyolefin satisfying all of the density, melt index, and melt index ratio specified herein, or to produce a polyolefin with good processability through addition of the internal electron donor.

In one embodiment, the mixture may include the first internal electron donor and the second internal electron donor in a mole ratio of about 3:7, about 3.5:6.5, about 4:6, about 4.5:5.5, about 5:5, about 5.5:4.5, about 6:4, about 6.5:3.5, or about 7:3.

In one embodiment, in Formula 4, R⁴ and R⁵ are independently a substituted or unsubstituted straight or branched C₁ to C₂₀ alkyl group, for example, C₁ to C₁₀ alkyl group, or C₁ to C₅ alkyl group. For example, the compound represented by Formula 4 may be a diethyl diester compound and may include at least one selected from among compounds represented by Formulas 4-1 to 4-7:

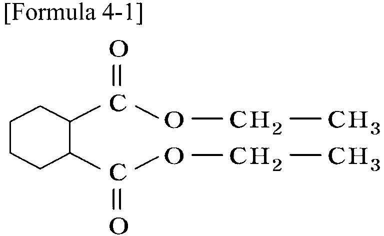

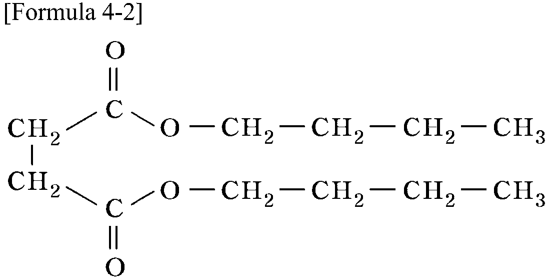

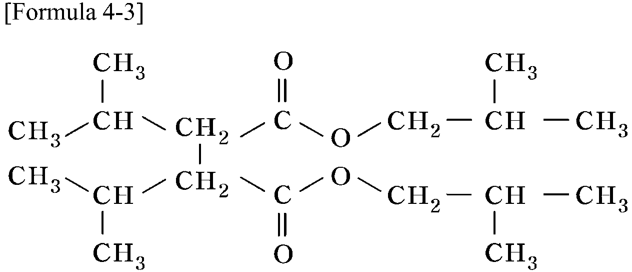

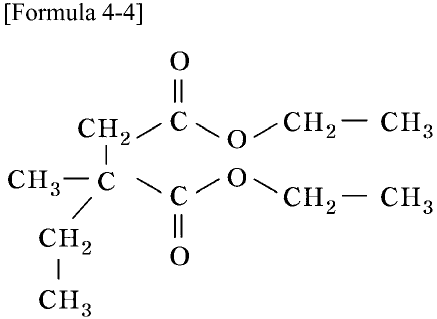

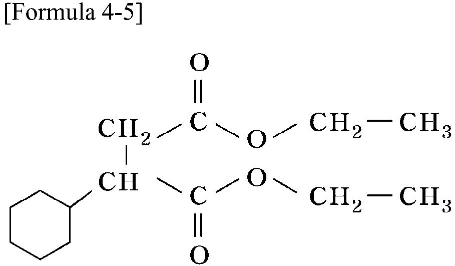

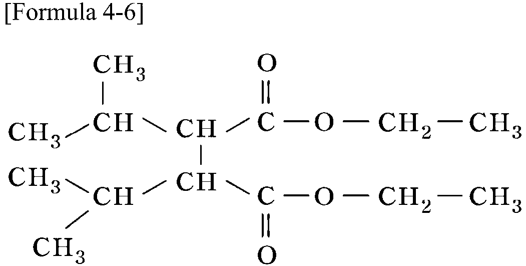

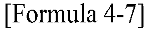

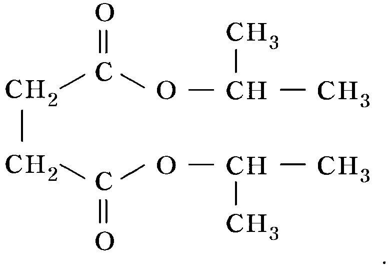

In one embodiment, in Formula 5, R⁷ and R⁸ may be independently a substituted or unsubstituted straight or branched C₁ to C₂₀ alkyl group, for example, a substituted or unsubstituted branched C₁ to C₁₀ alkyl group, or a substituted or unsubstituted branched C₁ to C₅ alkyl group. For example, the compound represented by Formula 5 may be a diisopropyl diester compound and may include at least one selected from among compounds represented by Formulas 5-1 and 5-2:

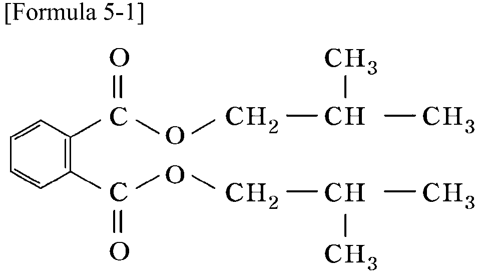

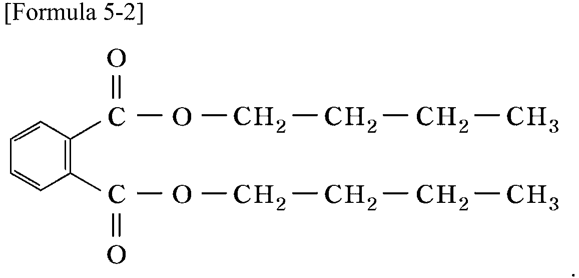

In one embodiment, in Formula 6, R⁹, R¹⁰, R¹¹ and R¹² are each independently a substituted or unsubstituted straight or branched C₁ to C₂₀ alkyl group, for example, a substituted or unsubstituted straight C₁ to C₁₀ alkyl group, or a substituted or unsubstituted straight C₁ to C₅ alkyl group. For example, the compound represented by Formula 6 may be a diethyl diester compound and may include at least one selected from among compounds represented by Formulas 6-1 to 6-4:

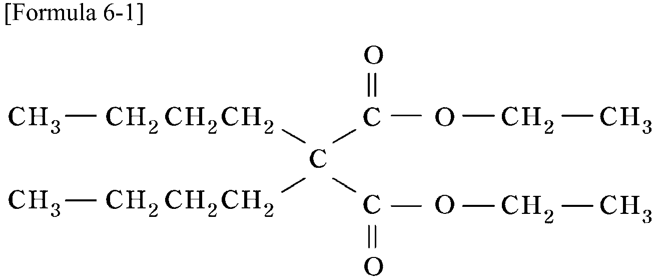

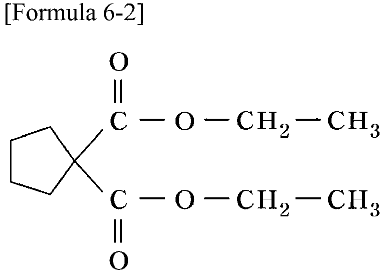

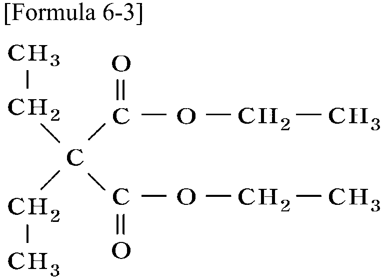

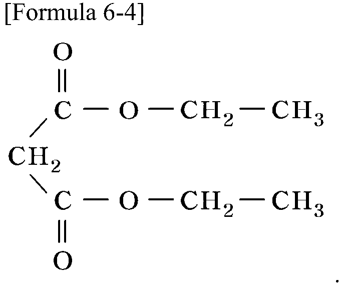

In one embodiment, relative to 1 mole of the external electron donor, the internal electron donor, that is, the mixture of the first and second internal donors may be present in an amount of about 0.002 moles to about 0.008 moles, preferably about 0.003 moles to about 0.004 moles, or about 0.007 moles to about 0.008 moles. Within this range, it can be easy to prepare a polyethylene satisfying the density, melt index and melt index ratio specified herein.

In one embodiment, the mixture may be a mixture of the compound represented by Formula 4 and the compound represented by Formula 5, and the compound represented by Formula 4 and the compound represented by Formula 5 may be present in a mole ratio of about 3:7 to about 7:3 in 10 moles of the mixture of the compound represented by Formula 4 and the compound represented by Formula 5 (first embodiment). In some embodiments, the mole ratio may range from about 3.5:6.5 to about 6.5:3.5, for example, about 4:6 to about 6:4, about 4.5:5.5 to about 5.5:4.5, or about 5:5.

In the first embodiment, relative to 1 mole of the external electron donor, the compound represented by Formula 4 may be present in an amount of 0.001 moles to 0.007 moles, preferably 0.003 moles to 0.004 moles, and the compound represented by Formula 5 may be present in an amount of 0.001 moles to 0.007 moles, preferably 0.003 moles to 0.004 moles. Within this range, it can be easy to prepare a polyethylene with good processability.

In one embodiment, the mixture may be a mixture of the compound represented by Formula 4 and the compound represented by Formula 6, and the compound represented by Formula 4 and the compound represented by Formula 6 may be present in a mole ratio of about 3:7 to about 7:3 in 10 moles of the mixture of the compound represented by Formula 4 and the compound represented by Formula 6 (second embodiment). In some embodiments, the mole ratio may range from about 3.5:6.5 to about 6.5:3.5, for example, about 4:6 to about 6:4, about 4.5:5.5 to about 5.5:4.5, or about 5:5.

In the second embodiment, relative to 1 mole of the external electron donor, the compound represented by Formula 4 may be present in an amount of 0.001 moles to 0.007 moles, preferably 0.003 moles to 0.004 moles, and the compound represented by Formula 6 may be present in an amount of 0.001 moles to 0.007 moles, preferably 0.003 moles to 0.004 moles. Within this range, it can be easy to prepare a polyethylene with good processability.

In one embodiment, the mixture may be a mixture of the compound represented by Formula 5 and the compound represented by Formula 6, and the compound represented by Formula 5 and the compound represented by Formula 6 may be present in a mole ratio of about 3:7 to about 7:3 in 10 moles of the mixture of the compound represented by Formula 5 and the compound represented by Formula 6 (third embodiment). In some embodiments, the mole ratio may range from about 3.5:6.5 to about 6.5:3.5, for example, about 4:6 to about 6:4, about 4.5:5.5 to about 5.5:4.5, or about 5:5.

In the third embodiment, relative to 1 mole of the external electron donor 1, the compound represented by Formula 5 may be present in an amount of 0.001 moles to 0.007 moles, preferably 0.003 moles to 0.004 moles, and the compound represented by Formula 6 may be present in an amount of 0.001 moles to 0.007 moles, preferably 0.003 moles to 0.004 moles. Within this range, it can be easy to prepare a polyethylene with good processability.

According to one embodiment, the mixture of the first internal electron donor and the second internal electron donor may be present in an amount of about 95 wt% or more, preferably about 99 wt% to about 100 wt%, more preferably about 100 wt%, based on 100 wt% of the total internal electron donors in the Ziegler-Natta catalyst for olefin polymerization. Within this range, the effects of the present invention can be easily realized. Herein, "total internal electron donors" may refer to compounds included in the pro-catalyst of the Ziegler-Natta catalyst for olefin polymerization, which are known to those skilled in the art to play a role in stabilizing the catalytic active sites of the titanium compound.

### [Titanium compound]

The titanium compound may be a compound having an active center metal, that is, a compound containing a metal having an active site. The titanium compound serves to catalyze a substantial polymerization reaction of an olefin monomer to produce polyolefin.

The titanium compound is a compound represented by Formula 1.

[Formula 1] TiXₙ(OR¹)₄₋ₙ

(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently one selected from the group consisting of a halogen group, a cyano group, a nitro group, and a C₁ to C₈ alkyl group.)
For example, the titanium compound may include at least one selected from the group consisting of halides of tetravalent titanium and alkoxides of tetravalent titanium. Preferably, the titanium compound is titanium tetrachloride (TiCl₄).

### [Magnesium compound]

The magnesium compound acts as a catalyst support and can modulate properties, such as activity and steric regularity, of an active center metal having an active site, such as a titanium compound, depending on the molecular structure and bonding strength through binding to an electron donor.

The magnesium compound is a compound represented by Formula 2.

[Formula 2] Mg(OR²)ₖX₂₋ₖ

(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently one selected from the group consisting of a halogen group, a cyano group, a nitro group, and a C₁ to C₈ alkyl group.)

For example, the magnesium compound may be a magnesium dialkoxide, a magnesium diaryloxide, magnesium chloride (MgCl₂), or the like. Preferably, the magnesium compound is magnesium dialkoxide that is available in high purity to reduce impurities in a final synthesized catalyst, or magnesium diethoxide that is readily soluble in solvents used during catalyst synthesis.

### [Organoaluminum compound]

As a co-catalyst, the organoaluminum compound can activate the active sites of the titanium compound.

The organoaluminum compound may include a compound represented by Formula 7.

[Formula 7] Al(R¹³)ₚX₃₋ₚ

(In Formula 7,
R¹³ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
p is an integer of 0 to 3; and
a substituent in "substituted or unsubstituted" is independently one selected from the group consisting of a halogen group, a cyano group, a nitro group, and a C₁ to C₈ alkyl group.)

In some embodiments, the organoaluminum compound may include at least one selected from the group consisting of trimethylaluminum, triethylaluminum, triisobutylaluminum, trioctylaluminum, diethylaluminum hydride, diisobutylaluminum hydride, diethylaluminum chloride, diisobutylaluminum chloride, sesquiethylaluminum chloride, and ethylaluminum dichloride. Preferably, the organoaluminum compound is triethylaluminum, which can increase polymerization activity and facilitate control of the weight average molecular weight of the polymerized polyolefin.

### [Pro-catalyst]

The pro-catalyst may include the titanium compound represented by Formula 1, the magnesium compound represented by Formula 2, and the internal electron donors, wherein the titanium compound represented by Formula 1 and the internal electron donors may be supported on the magnesium compound represented by Formula 2.

According to one embodiment, the pro-catalyst may be prepared in powder form. According to one embodiment, the Ziegler-Natta catalyst for olefin polymerization may be prepared by mixing the pro-catalyst with the organoaluminum compound and the external electron donor, as will be described below.

The pro-catalyst prepared in powder form enables the organoaluminum compound and the external electron donor to be uniformly coated. The powdered pro-catalyst can be sufficiently dispersed in the organoaluminum compound and the external electron donor to increase dispersion stability, thereby facilitating preparation of a polyolefin having a specific range of density, melt index, and melt index ratio described above.

A method for preparing a Ziegler-Natta pro-catalyst for olefin polymerization may include a primary stirring step in which the titanium compound represented by Formula 1 is mixed with the magnesium compound represented by Formula 2, followed by stirring a resulting mixture; a secondary stirring step in which a mixture of internal electron donors is added to the primarily stirred product, followed by stirring; and a vacuum drying step in which the secondarily stirred product is dried under vacuum.

In the primary stirring step, the titanium compound and the magnesium compound may be added to an organic solvent, followed by stirring the resulting mixture while raising the temperature from room temperature to a first temperature at a temperature ramp rate of about 0.5°C/min to about 1.5°C/min.

The organic solvent may be toluene, ether, acetone, alcohol, or the like, preferably toluene.

The first temperature may range from about 70°C to about 90°C, preferably about 75°C to about 85°C. In some embodiments, the first temperature may range from about 72°C to about 88°C, for example, about 72°C to about 75°C, about 75°C to about 80°C, about 80°C to about 85°C, or about 85°C to about 88°C. If the first temperature is too low, the internal electron donors can be insoluble in the solvent, and if the first temperature is too high, side reactions of the internal electron donors can occur.

In the secondary stirring step, the internal electron donors may be added to the primarily stirred product, followed by stirring for about 1.8 hours to about 2.2 hours while raising the temperature to a second temperature. In some embodiments, stirring may be performed for about 1.82 hours to about 1.9 hours, for example, about 1.9 hours to about 2 hours, or about 2 hours to about 2.2 hours.

The second temperature may range from about 100°C to about 120°C, preferably about 105°C to about 115°C. In some embodiments, the second temperature may range from about 102°C to about 118°C, for example, about 102°C to about 110°C, or about 110°C to about 118°C. If the second temperature is too low, the titanium compound cannot be supported on the magnesium compound, and if the second temperature is too high, the solvent can evaporate.

The preparation method may further include a tertiary stirring step after the secondary stirring step. In some embodiments, after removing the organic solvent and the titanium compound, a fresh organic solvent and a fresh titanium compound may be added to the secondarily stirred product, which in turn may be stirred for about 1.8 hours to about 2.2 hours while raising the temperature from room temperature to a third temperature. In some embodiments, the secondarily stirred product may be stirred for 1.82 hours to about 1.9 hours, about 1.9 hours to about 2 hours, about 2 hours to about 2.2 hours, or about 2 hours to about 2.2 hours. After stirring, the method may further include washing the tertiary stirring product with an organic solvent or the like.

The third temperature may range from about 100°C to about 120°C, preferably about 105°C to about 115°C. In some embodiments, the third temperature may range from about 102°C to about 118°C, for example, about 102°C to about 110°C, or about 110°C to about 118°C.

The vacuum drying step may include drying the secondarily stirred product or the tertiarily stirred product under vacuum to obtain a Ziegler-Natta pro-catalyst for olefin polymerization contained in powder form. The method may further include washing the secondarily stirred product or the tertiarily stirred product with an organic solvent or the like before vacuum drying the secondarily stirred product or the tertiarily stirred product.

### [Ziegler-Natta catalyst for olefin polymerization]

In the Ziegler-Natta pro-catalyst for olefin polymerization, the titanium compound and the external electron donor may be present in a mole ratio of about 1:60 to about 1:380, preferably in a mole ratio of about 1:120 to about 1:190. In some embodiments, the titanium compound and the external electron donor may be in a mole ratio of about 1:62 to about 1:378, for example, about 1:62 to about 1:150, about 1:150 to about 1:250, or about 1:250 to about 1:378. Within this range, the catalytic active site can have high stability and there is no problem of deterioration in activity due to poisoning of the catalytic active site.

In the Ziegler-Natta pro-catalyst for olefin polymerization, the organoaluminum compound and the external electron donor may be present in a mole ratio of about 1:3.0 x 10⁻⁷ to about 1:9.0 x 10⁻⁷, preferably about 1:5.0 x 10⁻⁷ to about 1:7.0 x 10⁻⁷. In some embodiments, the organoaluminum compound and the external electron donor may be present in a mole ratio of about 1:3.2 x 10⁻⁷ to about 1:8.8 x 10⁻⁷, for example, about 1:3.2 x 10⁻⁷ to about 1:5.0 x 10⁻⁷, about 1:5.0 x 10⁻⁷ to about 1:7.0 x 10⁻⁷, or about 1:7.0 x 10⁻⁷ to about 1:8.8 x 10⁻⁷. Within this range, the Ziegler-Natta catalyst can facilitate preparation of a polyolefin with good processability.

In the Ziegler-Natta pro-catalyst for olefin polymerization, the magnesium compound and the external electron donor may be present in a mole ratio of about 1:9 to about 1:13, preferably about 1:10 to about 1:12. In some embodiments, the magnesium compound and the external electron donor may be present in a mole ratio of about 1:9.2 to about 1:12.8, for example, about 1:9.2 to about 1:10.0, about 1:10.0 to about 1:11.0, or about 1:11.0 to about 1:12.8. Within this range, the Ziegler-Natta catalyst can facilitate preparation of a polyolefin with good processability.

The method for preparing the Ziegler-Natta catalyst for olefin polymerization may include adding the Ziegler-Natta pro-catalyst for olefin polymerization, the organoaluminum compound represented by Formula 7 and the external electron donor represented by Formula 3 to an organic solvent, followed by stirring. In the following description of the method for preparing the Ziegler-Natta catalyst for olefin polymerization, any redundant description regarding the Ziegler-Natta catalyst will be omitted.

The organic solvent may be hexane, toluene, ether, acetone, alcohol or the like, preferably hexane.

Stirring may be performed at a stirring rate of about 280 rpm to about 320 rpm, preferably about 290 rpm to about 310 rpm. In some embodiments, stirring may be performed at a stirring rate of about 285 rpm to about 315 rpm, for example, about 285 rpm to about 295 rpm, about 295 rpm to about 305 rpm, or about 305 rpm to about 315 rpm.

### [Polyolefin preparation method]

A polyolefin preparation method according to one embodiment includes polymerizing an olefin monomer in the presence of the Ziegler-Natta catalyst for olefin polymerization.

According to one embodiment, the olefin monomer may include an olefin monomer represented by Formula 8.

[Formula 8] CH₂=CHR¹⁴

(In Formula 8,
R¹⁴ is hydrogen or a C₁ to C₆ alkyl or aryl group.)

In one embodiment, the polyolefin preparation method may be a method for preparing polyethylene. Accordingly, the polyolefin preparation method may include polymerizing an olefin monomer, preferably ethylene, in the presence of the Ziegler-Natta catalyst for olefin polymerization.

In the polyolefin preparation method, polymerization may be performed at a pressure of about 6 bar to about 8 bar and at a temperature of about 80°C to about 90°C in a hydrogen gas atmosphere. If the temperature is too low, polymerization does not occur due to low catalyst activity, and if the temperature is too high, the catalyst activity quickly decreases due to catalyst overreaction.

Polymerization may be performed for about 0.5 hours to about 1.5 hours, preferably about 0.8 hours to about 1.2 hours

According to one embodiment, the Ziegler-Natta catalyst for olefin polymerization may be present in an amount of about 1 x 10⁻⁵ moles to about 3 x 10⁻⁵ moles, preferably about 1.5 x 10⁻⁵ moles to about 2.5 x 10⁻⁵ moles, relative to 1 mole of the olefin monomer. In some embodiments, the Ziegler-Natta catalyst for olefin polymerization may be present in an amount of about 1.2 x 10⁻⁵ moles to about 2.9 x 10⁻⁵ moles, for example, about 1.2 x 10⁻⁵ moles to about 1.5 x 10⁻⁵ moles, about 1.5 x 10⁻⁵ moles to about 2 x 10⁻⁵ moles, about 2 x 10⁻⁵ moles to about 2.5 x 10⁻⁵ moles, or about 2.5 x 10⁻⁵ moles to about 2.9 x 10⁻⁵ moles, relative to 1 mole of the olefin monomer. Within this range, the olefin monomer can produce polyolefin with a high polymerization yield.

### [Polyolefin resin]

According to one embodiment, a polyolefin resin is provided. The polyolefin resin is prepared by the above method and has an MFR (MI_{21.6}/MI_{2.16}) of about 30.0 to about 50.0. In some embodiments, the MFR (MI_{21.6}/MI_{2.16}) may range from about 30.5 to about 49.5, for example, about 30.5 to about 33.5, about 33.5 to about 36.5, about 36.5 to about 39.5, about 39.5 to about 42.5, about 42.5 to about 45.5, or about 45.5 to about 48.5.

Next, the present invention will be described in more detail with reference to some examples. It should be understood that these examples are provided for illustration only and are no to be construed in any way as limiting the invention.

Components used in each of Examples and Comparative Examples are as follows:
External electron donor:

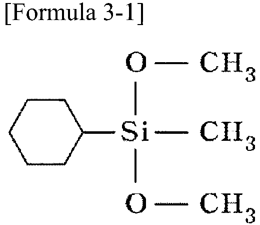

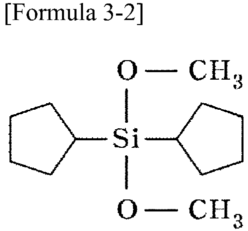

Internal electron donor:

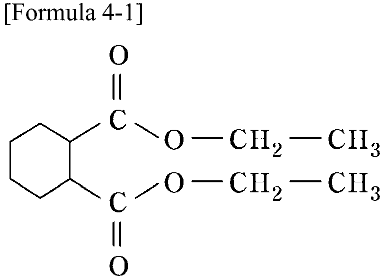

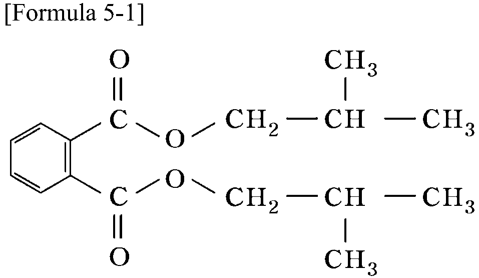

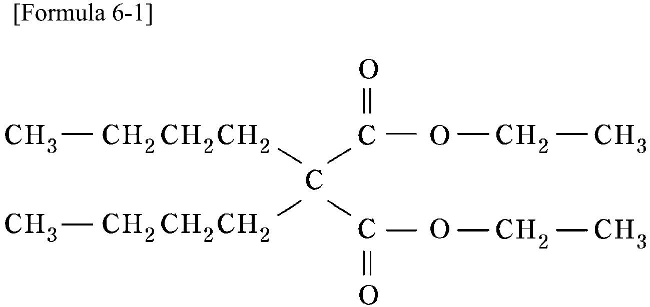

### Example 1

### Preparative Example 1: Preparation of Ziegler-Natta pro-catalyst for olefin polymerization

4 g of a magnesium compound (Mg(OC₂H₅)₂) carrier and 5 ml of a titanium compound (TiCl₄) were added to 35 ml of toluene, followed by primary stirring at a rate of 300 rpm while raising the temperature from room temperature to 80°C at a rate of 1°C/min. Then, when the reaction temperature reached 80°C, 1.4 mmol of an internal electron donor of Formula 4-1 and 0.6 mmol of an internal electron donor of Formula 5-1 were added to the primarily stirred product, followed by secondary stirring for 2 hours while maintaining the temperature after raising the temperature to 110°C at a rate of 1°C/min. Then, after removing the TiCl₄ + toluene solution, fresh TiCl₄ (13 ml) and toluene (20 ml) were added to the secondarily stirred product, followed by tertiary stirring for 2 hours while maintaining the temperature after raising the temperature from room temperature to 110°C at a rate of 1°C/min. Then, the resulting carrier catalyst obtained after tertiary stirring was washed 4 times with 50 ml toluene at 100°C and twice with 100 ml hexane at 60°C, followed by drying under vacuum, thereby preparing a Ziegler-Natta pro-catalyst (carrier catalyst) for olefin polymerization in powder form.

### Preparative Example 2: Preparation of Ziegler-Natta catalyst for olefin polymerization and polyethylene

A 2 L high-pressure reactor was dried in an oven and assembled in a hot state, followed by creating a nitrogen atmosphere inside the reactor through alternation of nitrogen and vacuum conditions three times. Then, with 1,000 ml of hexane, an organic solvent, added to the reactor, 15 mg of the Ziegler-Natta pro-catalyst for olefin polymerization (Preparative Example 1), 0.24 ml of the external electron donor of Formula 3-1 (solution diluted 1/20 by volume in hexane), and 2 mmol of triethylaluminum (2 ml of 1 M hexane solution), an organoaluminum compound (co-catalyst), were additionally added to the reactor, followed by stirring the resulting solution at 300 rpm, thereby preparing a Ziegler-Natta catalyst for olefin polymerization.

Next, after the temperature of the reactor was raised to 85°C, hydrogen was injected once at 3 bar to the reactor, followed by polymerization of polyethylene for 1 hour while continuously adding ethylene at a constant pressure of 7 bar. Then, the temperature of the reactor was lowered to room temperature, followed by collecting and drying the resulting polymer, thereby preparing a polyethylene resin in white powder form.

### Examples 2 to 27

Ziegler-Natta pro-catalysts for olefin polymerization, Ziegler-Natta catalysts for olefin polymerization, and polyethylene resins were prepared in the same manner as in Example 1 except that the internal electron donors and the external electron donors were changed together with the content thereof, as listed in Table 1.

### Comparative Example 1

### Preparative Example 1: Preparation of Ziegler-Natta pro-catalyst for olefin polymerization

4 g of a magnesium compound (Mg(OC₂H₅)₂) carrier and 5 ml of a titanium compound (TiCl₄) were added to 35 ml of toluene, followed by primary stirring at a rate of 300 rpm while raising the temperature from room temperature to 80°C at a rate of 1°C/min. Then, when the reaction temperature reached 80°C, 2.0 mmol of an internal electron donor of Formula 4-1 was added to the primarily stirred product, followed by secondary stirring for 2 hours while maintaining the temperature after raising the temperature to 110°C at a rate of 1°C/min. Then, after removing the TiCl₄ + toluene solution, fresh TiCl₄ (13 ml) and toluene (20 ml) were added to the secondarily stirred product, followed by tertiary stirring for 2 hours while maintaining the temperature after raising the temperature from room temperature to 110°C at a rate of 1°C/min. Then, the resulting carrier catalyst obtained after tertiary stirring was washed 4 times with 50 ml toluene at 100°C and twice with 50 ml hexane at 60°C, followed by drying under vacuum, thereby preparing a Ziegler-Natta pro-catalyst (carrier catalyst) for olefin polymerization in powder form.

### Preparative Example 2: Preparation of Ziegler-Natta catalyst for olefin polymerization and polyethylene

A 2 L high-pressure reactor was dried in an oven and assembled in a hot state, followed by creating a nitrogen atmosphere inside the reactor through alternation of nitrogen and vacuum conditions three times. Then, with 1,000 ml of hexane, an organic solvent, added to the reactor, 15 mg of the Ziegler-Natta pro-catalyst for olefin polymerization (Preparative Example 1), 0.24 ml of the external electron donor of Formula 3-1 (solution diluted 1/20 by volume in hexane), and 2 mmol of triethylaluminum (2 ml of 1 M hexane solution), an organoaluminum compound (co-catalyst), were additionally added to the reactor, followed by stirring the resulting solution at 300 rpm, thereby preparing a Ziegler-Natta catalyst for olefin polymerization.

Next, after the temperature of the reactor was raised to 85°C, hydrogen was injected once at 3 bar to the reactor, followed by polymerization of polyethylene for 1 hour while continuously adding ethylene (the Ziegler-Natta catalyst for olefin polymerization was added in an amount of 2.0 x 10⁻⁵ moles relative to 1 mole of ethylene) at a constant pressure of 7 bar. Then, the temperature of the reactor was lowered to room temperature, followed by collecting and drying the resulting polymer, thereby preparing a polyethylene resin in white powder form.

### Comparative Examples 2 to 15

Ziegler-Natta pro-catalysts for olefin polymerization, Ziegler-Natta catalysts for olefin polymerization, and polyethylene resins were prepared in the same manner as in Comparative Example 1 except that the internal electron donors and the external electron donors were changed together with the content thereof, as listed in Table 1.

### Property evaluation of polyethylene

Activity (G_{PE}/G_{cat}) (unit: none): Weight of polyethylene obtained (g)/Weight of catalyst used (g)

MFI_{2.16} (unit: g/10min) and MFI_{21.6} (unit: g/10min): MFI_{2.16} under a load of 2.16 kg at 190°C and MFI_{21.6} under a load of 21.6 kg at 190°C were measured using a melt index measurement device (TOYOSEIKI MELT INDEXER P-101) in accordance with ASTM D1238.

Melt flow ratio: The melt indices MFI_{21.6} and MFI_{2.16} were measured in accordance with ASTM D 1238, followed by calculating the MFR (MI_{21.6}/MI_{2.16}).

Density (unit: g/cm³): Density was measured in accordance with ASTM D1505.

**Table 1**

| Item | Internal electron donor | External electron donor | Activity | MI (I_{2.16}) | MI (I_{21.6}) | MFR | Density |
|---|---|---|---|---|---|---|---|
| Example1 | Formula 4-1 + Formula 5-1 (mole ratio: 7:3) | Formula 3-1 | 3,826 | 1.0 | 44.1 | 44.1 | 0.954 |
| Example2 | Formula 4-1 + Formula 5-1 (mole ratio: 7:3) | Formula 3-2 | 3,160 | 0.8 | 34.0 | 42.5 | 0.955 |
| Example3 | Formula 4-1 + Formula 5-1 (mole ratio: 7:3) | Formula 3-1 + Formula 3-2 | 3,716 | 0.1 | 4.8 | 48.4 | 0.964 |
| Example4 | Formula 4-1 + Formula 5-1 (mole ratio: 5:5) | Formula 3-1 | 4,160 | 0.8 | 36.6 | 45.8 | 0.956 |
| Example5 | Formula 4-1 + Formula 5-1 (mole ratio: 5:5) | Formula 3-2 | 4,394 | 0.2 | 8.6 | 43.2 | 0.955 |
| Example6 | Formula 4-1 + Formula 5-1 (mole ratio: 5:5) | Formula 3-1 + Formula 3-2 | 3,795 | 2.2 | 104.5 | 47.5 | 0.956 |
| Example7 | Formula 4-1 + Formula 5-1 (mole ratio: 3:7) | Formula 3-1 | 5,165 | 1.3 | 42.1 | 32.4 | 0.957 |
| Example8 | Formula 4-1 + Formula 5-1 (mole ratio: 3:7) | Formula 3-2 | 3,533 | 5.7 | 184.7 | 32.4 | 0.962 |
| Example9 | Formula 4-1 + Formula 5-1 (mole ratio: 3:7) | Formula 3-1 + Formula 3-2 | 5,055 | 0.6 | 20.5 | 34.2 | 0.961 |
| Example 10 | Formula 4-1 + Formula 6-1 (mole ratio: 7:3) | Formula 3-1 | 3,267 | 0.7 | 26.0 | 37.2 | 0.957 |
| Example 11 | Formula 4-1 + Formula 6-1 (mole ratio: 7:3) | Formula 3-2 | 4,667 | 1.1 | 40.7 | 37.0 | 0.961 |
| Example 12 | Formula 4-1 + Formula 6-1 (mole ratio: 7:3) | Formula 3-1 + Formula 3-2 | 3,279 | 0.6 | 25.3 | 42.2 | 0.955 |
| Example 13 | Formula 4-1 + Formula 6-1 (mole ratio: 5:5) | Formula 3-1 | 4,933 | 0.1 | 3.9 | 39.4 | 0.957 |
| Example 14 | Formula 4-1 + Formula 6-1 (mole ratio: 5:5) | Formula 3-2 | 4,600 | 2.4 | 74.2 | 30.9 | 0.961 |
| Example 15 | Formula 4-1 + Formula 6-1 (mole ratio: 5:5) | Formula 3-1 + Formula 3-2 | 4,479 | 0.5 | 19.7 | 39.3 | 0.957 |
| Example 16 | Formula 4-1 + Formula 6-1 (mole ratio: 3:7) | Formula 3-1 | 4,667 | 0.1 | 3.7 | 36.9 | 0.952 |
| Example 17 | Formula 4-1 + Formula 6-1 (mole ratio: 3:7) | Formula 3-2 | 3,978 | 2.7 | 97.7 | 36.2 | 0.958 |
| Example 18 | Formula 4-1 + Formula 6-1 (mole ratio: 3:7) | Formula 3-1+ Formula 3-2 | 4,024 | 2.1 | 75.4 | 35.9 | 0.958 |
| Example 19 | Formula 6-1 + Formula 5-1 (mole ratio: 7:3) | Formula 3-1 | 5,816 | 7.3 | 241.6 | 33.1 | 0.962 |
| Example 20 | Formula 6-1 + Formula 5-1 (mole ratio: 7:3) | Formula 3-2 | 6,256 | 3.6 | 115.9 | 32.2 | 0.964 |
| Example 21 | Formula 6-1 + Formula 5-1 (mole ratio: 7:3) | Formula 3-1+ Formula 3-2 | 6,134 | 1.6 | 52.0 | 32.5 | 0.964 |
| Example 22 | Formula 6-1 + Formula 5-1 (mole ratio: 5:5) | Formula 3-1 | 6,733 | 0.5 | 15.7 | 31.4 | 0.957 |
| Example 23 | Formula 6-1 + Formula 5-1 (mole ratio: 5:5) | Formula 3-2 | 5,867 | 0.6 | 19.1 | 31.8 | 0.956 |
| Example 24 | Formula 6-1 + Formula 5-1 (mole ratio: 5:5) | Formula 3-1 + Formula 3-2 | 6,267 | 0.5 | 15.2 | 30.3 | 0.964 |
| Example 25 | Formula 6-1 + Formula 5-1 (mole ratio: 3:7) | Formula 3-1 | 5,267 | 1.0 | 32.2 | 32.2 | 0.960 |
| Example 26 | Formula 6-1 + Formula 5-1 (mole ratio: 3:7) | Formula 3-2 | 5,267 | 1.2 | 37.8 | 31.5 | 0.960 |
| Example 27 | Formula 6-1 + Formula 5-1 (mole ratio: 3:7) | Formula 3-1+ Formula 3-2 | 5,467 | 0.1 | 3.5 | 34.7 | 0.958 |
| Comparative Example 1 | Formula 4-1 | Formula 3-1 | 4,600 | 1.3 | 36.1 | 27.8 | 0.961 |
| Comparative Example 2 | Formula 4-1 | Formula 3-2 | 4,533 | 1.3 | 36.8 | 28.3 | 0.962 |
| Comparative Example 3 | Formula 4-1 | Formula 3-1+ Formula 3-2 | 5,667 | 1.1 | 32.0 | 29.1 | 0.957 |
| Comparative Example 4 | Formula 5-1 | Formula 3-1 | 6,667 | 0.7 | 19.1 | 27.3 | 0.954 |
| Comparative Example 5 | Formula 5-1 | Formula 3-2 | 6,267 | 1.4 | 34.4 | 24.6 | 0.960 |
| Comparative Example 6 | Formula 5-1 | Formula 3-1+ Formula 3-2 | 5,600 | 1.6 | 41.0 | 25.6 | 0.956 |
| Comparative Example 7 | Formula 6-1 | Formula 3-1 | 6,167 | 6.1 | 162.3 | 26.6 | 0.959 |
| Comparative Example 8 | Formula 6-1 | Formula 3-2 | 5,600 | 5.0 | 125.0 | 25.0 | 0.957 |
| Comparative Example 9 | Formula 6-1 | Formula 3-1+ Formula 3-2 | 5,067 | 2.5 | 64.0 | 25.6 | 0.959 |
| Comparative Example 10 | Formula 4-1 + Formula 5-1 (mole ratio: 8:2) | Formula 3-1 | 4,250 | 0.8 | 23.8 | 29.8 | 0.958 |
| Comparative Example 11 | Formula 4-1 + Formula 5-1 (mole ratio: 2:8) | Formula 3-1 | 5,237 | 1.5 | 38.9 | 25.9 | 0.956 |
| Comparative Example 12 | Formula 4-1 + Formula 6-1 (mole ratio: 8:2) | Formula 3-1 | 6,157 | 6.9 | 191.8 | 27.8 | 0.956 |
| Comparative Example 13 | Formula 4-1 + Formula 6-1 (mole ratio: 2:8) | Formula 3-1 | 5,533 | 1.3 | 34.5 | 26.5 | 0.959 |
| Comparative Example 14 | Formula 6-1 + Formula 5-1 (mole ratio: 8:2) | Formula 3-1 | 6,950 | 4.6 | 111.8 | 24.3 | 0.962 |
| Comparative Example 15 | Formula 6-1 + Formula 5-1 (mole ratio: 2:8) | Formula 3-1 | 5,860 | 2.5 | 65.5 | 26.2 | 0.962 |

*In Table 1,
the total mole number of the internal electron donor was 0.0038 mmol,
the total mole number of the external electron donor was 1.2 mmol, and,
in Formula 3-1 + Formula 3-2 of the external electron donor, Formula 3-1 and Formula 3-2 were present in a mole ratio of 1:1.

Referring to Table 1, the Ziegler-Natta catalysts for olefin polymerization prepared in Examples produced polyolefins satisfying all of the density, melt index and melt index ratio according to the present invention.

Conversely, the Ziegler-Natta catalysts for olefin polymerization not satisfying the present invention failed to produce a polyolefin satisfying all of the density, melt index and melt index ratio according to the present invention.

It should be understood that various modifications, changes, alterations, and equivalent embodiments may be made by those skilled in the art without departing from the spirit and scope of the invention.

### [Industrial Availability]

By employing two types of specific internal electron donors and a specific external electron donor to achieve the density, melt index, and melt flow ratio specified herein, the Ziegler-Natta catalyst for olefin polymerization enables the production of polyolefins with good processability.

## Claims

1. A Ziegler-Natta catalyst for olefin polymerization, comprising:
a Ziegler-Natta pro-catalyst for olefin polymerization comprising a titanium compound represented by Formula 1, a magnesium compound represented by Formula 2, and an internal electron donor;
an organoaluminum compound represented by Formula 7; and
an external electron donor represented by Formula 3,
wherein the internal electron donor is a mixture of a first internal electron donor selected from among compounds represented by Formulas 4 to 6 and a second internal electron donor selected from among the compounds represented by Formulas 4 to 6 and different from the first internal electron donor; and
wherein a molar ratio of the first internal electron donor to the second internal electron donor is 3:7 to 7:3, based on the total moles of the mixture.
[Formula 1] TiXₙ(OR¹)₄₋ₙ
(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently one selected from the group consisting of a halogen group, a cyano group, a nitro group, and a C₁ to C₈ alkyl group.)
[Formula 2] Mg(OR²)ₖX₂₋ₖ
(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently one selected from the group consisting of a halogen group, a cyano group, a nitro group, and a C₁ to C₈ alkyl group.) 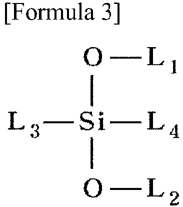
(In Formula 3,
L₁ and L₂ are each independently a substituted or unsubstituted C₁ to C₂₀ alkyl group, where a substituent in "substituted or unsubstituted" is independently one selected from the group consisting of a halogen group, a cyano group, a nitro group, and a C₁ to C₈ alkyl group; and
L₃ and L₄ are each independently one selected from the group consisting of a substituted or unsubstituted C₁ to C₂₀ alkyl group and a substituted or unsubstituted C₃ to C₂₀ cycloalkyl group,
where a substituent in "substituted or unsubstituted" is independently one selected from the group consisting of a halogen group, a cyano group, a nitro group, and a C₁ to C₈ alkyl group.) 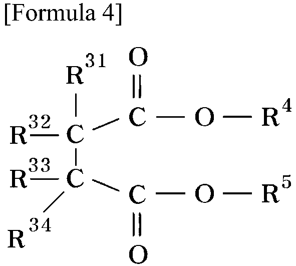
(In Formula 4,
R³¹, R³², R³³ and R³⁴ are each independently one selected from the group consisting of hydrogen, a substituted or unsubstituted C₁ to C₂₀ alkyl group, a substituted or unsubstituted C₃ to C₂₀ cycloalkyl group, and a substituted or unsubstituted C₃ to C₂₀ aryl group, or R³¹ and R³³ are linked to each other to form a substituted or unsubstituted C₃ to C₂₀ cycloalkyl group;
R⁴ and R⁵ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently one selected from the group consisting of a halogen group, a cyano group, a nitro group, and a C₁ to C₈ alkyl group.) 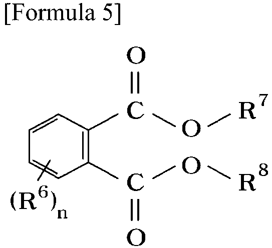
(In Formula 5,
R⁶, R⁷ and R⁸ are independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
n is an integer of 0 to 4; and
a substituent in "substituted or unsubstituted" is independently one selected from the group consisting of a halogen group, a cyano group, a nitro group, and a C₁ to C₈ alkyl group.) 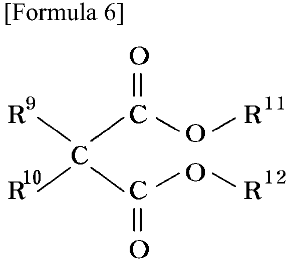
(In Formula 6,
R⁹ and R¹⁰ are each independently one selected from the group consisting of hydrogen, a substituted or unsubstituted C₁ to C₂₀ alkyl group, a substituted or unsubstituted C₃ to C₂₀ cycloalkyl group, and a substituted or unsubstituted C₃ to C₂₀ aryl group, or R⁹ and R¹⁰ are linked to each other to form a substituted or unsubstituted C₃ to C₂₀ cycloalkyl group;
R¹¹ and R¹² are each independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group; and
a substituent in "substituted or unsubstituted" is independently one selected from the group consisting of a halogen group, a cyano group, a nitro group, and a C1 to C8 alkyl group.)
[Formula 7] Al(R¹³)ₚX₃₋ₚ
(In Formula 7,
R¹³ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
X is a halogen atom;
p is an integer of 0 to 3; and
a substituent in "substituted or unsubstituted" is independently one selected from the group consisting of a halogen group, a cyano group, a nitro group, and a C₁ to C₈ alkyl group.)

2. The Ziegler-Natta catalyst for olefin polymerization according to claim 1, wherein the mixture is a mixture of the compound represented by Formula 4 and the compound represented by Formula 5, the compound represented by Formula 4 and the compound represented by Formula 5 being present in a mole ratio of 3:7 to 7:3 in 10 moles of the mixture of the compound represented by Formula 4 and the compound represented by Formula 5.

3. The Ziegler-Natta catalyst for olefin polymerization according to claim 1, wherein the mixture is a mixture of the compound represented by Formula 4 and the compound represented by Formula 6, the compound represented by Formula 4 and the compound represented by Formula 6 being present in a mole ratio of 3:7 to 7:3 in 10 moles of the mixture of the compound represented by Formula 4 and the compound represented by Formula 6.

4. The Ziegler-Natta catalyst for olefin polymerization according to claim 1, wherein the mixture is a mixture of the compound represented by Formula 5 and the compound represented by Formula 6, the compound represented by Formula 5 and the compound represented by Formula 6 being present in a mole ratio of 3:7 to 7:3 in 10 moles of the mixture of the compound represented by Formula 5 and the compound represented by Formula 6.

5. The Ziegler-Natta catalyst for olefin polymerization according to claim 1, wherein the compound represented by Formula 4 comprises at least one selected from among compounds represented by Formulas 4-1 to 4-7, the compound represented by Formula 5 comprises at least one selected from among compounds represented by Formula 5-1 and 5-2, and the compound represented by Formula 6 comprises at least one selected from among compounds represented by Formulas 6-1 to 6-4:

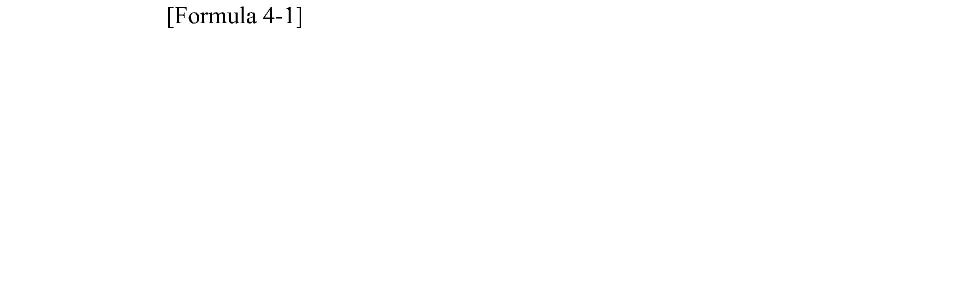

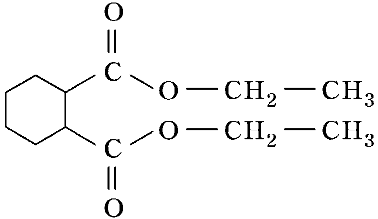

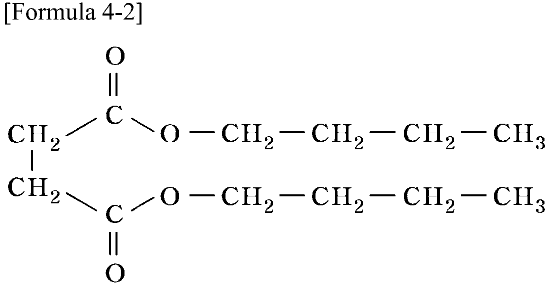

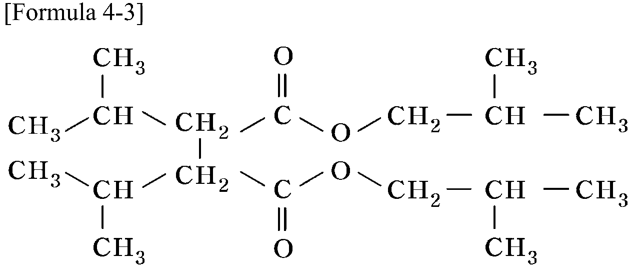

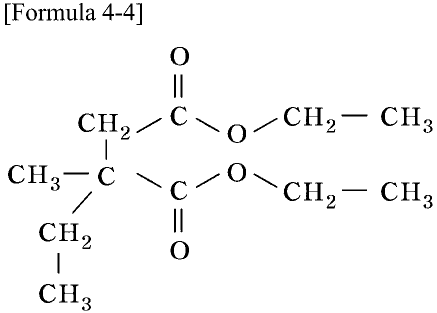

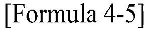

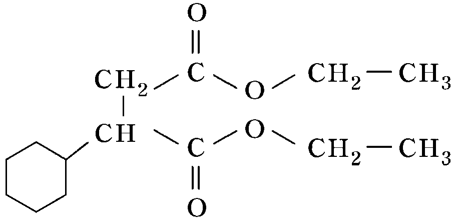

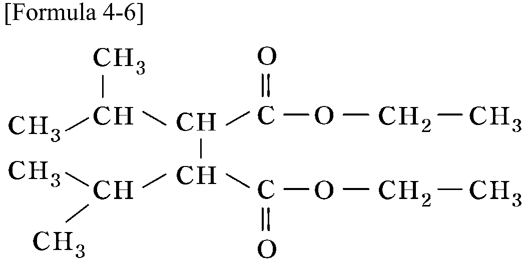

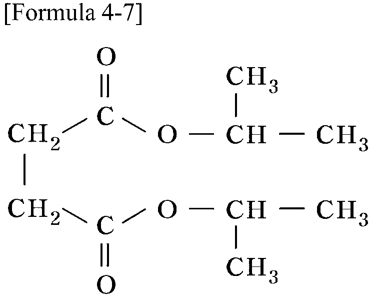

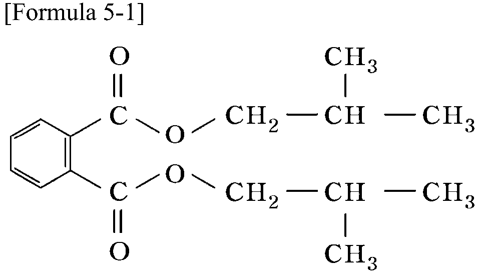

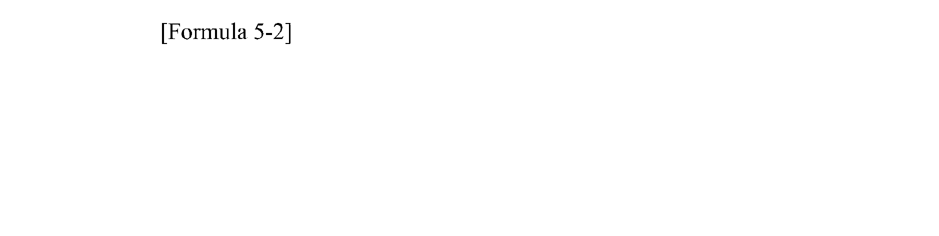

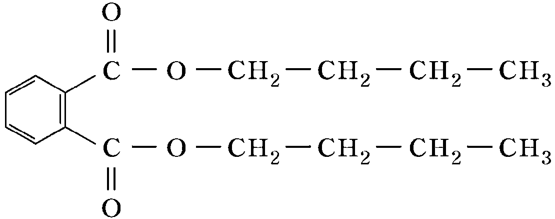

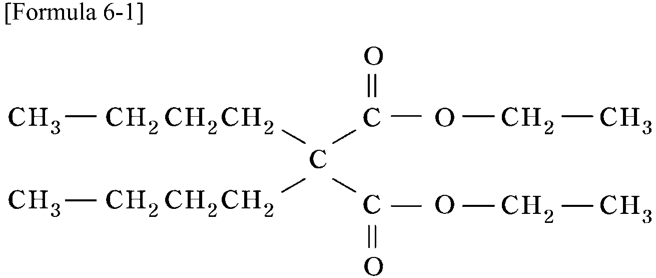

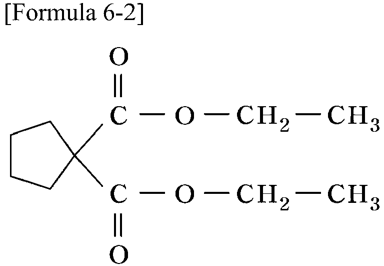

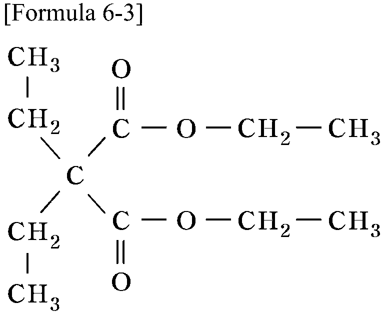

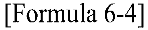

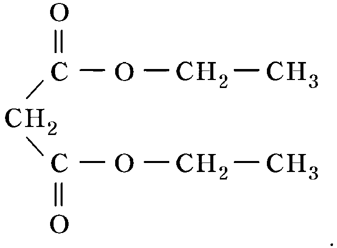

6. The Ziegler-Natta catalyst for olefin polymerization according to claim 1, wherein the internal electron donor is present in an amount of 0.002 moles to 0.008 moles relative to 1 mole of the external electron donor.

7. The Ziegler-Natta catalyst for olefin polymerization according to claim 1, wherein, in Formula 3, at least one of L₃ and L₄ is a substituted or unsubstituted C₃ to C₂₀ cycloalkyl group.

8. The Ziegler-Natta catalyst for olefin polymerization according to claim 7, wherein the external electron donor is a mixture of a first external electron donor,
where one of L₃ and L₄ in Formula 3 is a substituted or unsubstituted C₃ to C₂₀ cycloalkyl group, and a second external electron donor, where both L₃ and L₄ in Formula 3 are a substituted or unsubstituted C₃ to C₂₀ cycloalkyl group.

9. The Ziegler-Natta catalyst for olefin polymerization according to claim 8, wherein the first external electron donor and the second external electron donor are present in a mole ratio of 3:7 to 7:3 in 10 moles of the mixture.

10. The Ziegler-Natta catalyst for olefin polymerization according to claim 7, wherein the external electron donor comprises at least one selected from among compounds represented by Formula 3-1 and 3-2:

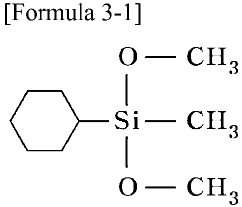

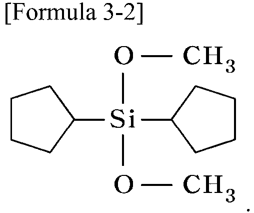

11. The Ziegler-Natta catalyst for olefin polymerization according to claim 1, wherein the external electron donor is present in an amount of 40 wt% to 60 wt% based on 100 wt% of the Ziegler-Natta catalyst for olefin polymerization.

12. The Ziegler-Natta catalyst for olefin polymerization according to claim 1, wherein the mixture of the first internal electron donor and the second internal electron donor is present in an amount of 95 wt% or more based on 100 wt% of the total internal electron donors in the Ziegler-Natta catalyst for olefin polymerization.

13. A method for producing, comprising: polymerizing an olefin monomer in the presence of the Ziegler-Natta catalyst for olefin polymerization according to any one of claims 1 to 12.

14. The polyolefin preparation method according to claim 13, wherein the Ziegler-Natta catalyst for olefin polymerization is present in an amount of 1 x 10⁻⁵ moles to 3 x 10⁻⁵ moles relative to 1 mole of the olefin monomer.

15. A polyolefin resin prepared by the polyolefin preparation method according to claim 13 and having an MFR (MI_{21.6}/MI_{2.16}) of 30.0 to 50.0.
